# EUROPEAN PATENT APPLICATION

(11) **EP 2 541 801 A1**
(43) Date of publication of application: **02.01.2013**
(21) Application number: 12173783.7
(22) Date of filing: 27.06.2012
(51) Int. Cl.: H04B 7/185

(54) **APPARATUS FOR SENDING SIGNALS TO A SATELLITE CONFIGURED FOR BROADCAST TRANSMISSIONS**

(30) Priority: 30.06.2011 IT MI20111212
(71) Applicant: Sky Italia S.R.L., 20138 Milano (IT)
(72) Inventor: Bertolotti, Massimo, I-20138 MILANO (IT)
(74) Representative: Dini, Roberto

(57) **Abstract**

An apparatus for sending signals to a satellite configured for broadcast transmissions, said apparatus comprising:
- an input interface (10) for receiving an input signal (S1) containing data to be broadcast transmitted;
- a modulator (20) for carrying out a modulation of said input signal (S1) and outputting a corresponding modulated signal (S2);
- an output interface (30) connected to said modulator (20) to send said modulated signal (S2) to an uplink antenna (40) for sending it to a satellite (50), the latter being configured for receiving and retransmitting said modulated signal (S2) in a nominal frequency band (B),

a standard symbol rate (SSR) being defined for said modulation and said retransmission of said modulated signal (S2),
wherein:
- said modulator (20) is configured for processing said input signal (S1) in such a manner that the symbol rate (SR) of said modulated signal (S2) is greater by at least 5% than said standard symbol rate (SSR),
- said modulator (20) is further configured for carrying out a pre-correction of said modulated signal (S2) as a function of a transfer function of said satellite (50) in said nominal frequency band (B).

## Description

The present invention relates to an apparatus for sending signals to a satellite configured for broadcast transmissions. In particular, the invention applies to the field of satellite television transmissions.

It is known that systems for broadcast transmission of television contents are made up of the following elements:
- an assembly of contents, or "bouquet", that is wished to be sent to an undefined number of addressees;
- a ground control apparatus in which these contents are processed so that they can then be broadcast through satellite;
- at least one antenna (a so-called "uplink antenna") enabling the contents processed by the ground control apparatus to be sent to a satellite;
- a satellite, which is configured for receiving these contents and retransmitting them;
- a plurality of receiving apparatus, comprised of a parabolic antenna and receiving circuits, through which the final users can receive data broadcast by the satellite and enjoy the same through their own television sets.

Typically, a broadcaster, to enable its offer to be transmitted via satellite (i.e. the above mentioned bouquet) must rent a band on one or more satellites at a given orbital position; in particular, those which are to be rent are the band segments made available on the satellites.

In order to reach the final user base (the so-called consumer base), broadcasting is carried out by the DTH (Direct to Home) mode using the DVB-S or DVB-S2 satellite transmission standards. These standards contemplate modulations based on Phase Shift Keying (PSK). In particular, the QPSK modulation is used for DVB-S transmissions, while the 8PSK modulation is typically used for DVB-S2 transmissions.

Through the ground control apparatus, the signal containing the audio-video digital fluxes and data relating to the broadcast television channels, is modulated through a single-carrier modulation process.

The signal thus converted, with the electro-magnetic features compatible with radio transmission, is transmitted and addressed by the uplink antennas connected to the ground control apparatus to the transponder dedicated thereto, wherefrom it comes back distributed on the ground user's area so that it is received by the parabolic receiving antennas of the final clients (the public).

At the moment on the satellites of the Hot Bird (HB) constellation, at 13°E, presently referred to as HB6, HB8 and HB9, it is possible to rent transponders for transmission to the public in the DTH mode.

Transponders, i.e. the satellite portions, are rent by a nominal band (expressed in MHz) inside which, in the DVB-S or DVB-S2 mode, it is possible to transmit the transport streams (i.e. data packets).

Transponders differentiate from each other for a different transport capability, expressed by the nominal band: the latter practically is the radio frequency band (expressed in MHz) available for re-transmission of the received modulated signal. Generally, transponders on the satellite fleet Hot Bird have a nominal band equal to 33 MHz.

Given the nominal band, in order to enable correct distribution to the public of the services transmitted on a given transponder, a modulation is identified that in turn determines which is the available real band, expressed in Mb/s (or in Mbaud), for data transportation.

In this context, the transmission efficiency is identified by the amount of symbols that can be sent, the occupied radio-frequency band being the same: the greater the number of symbols per second (symbol rate) that can be transmitted in the available band on the transponder, the greater the number of information bits that can be carried.

In order to respect the assigned nominal band and the features of the satellite channel, usually a DVB-S or DVB-S2 modulation is implemented that must be able to ensure a fair compromise between nominal band and amount of transmitted data.

In case of use of the DVB-S standard, with QPSK modulation, FEC=3/4, roll-off=0.35, a symbol rate equal to 27.5 Mbaud is employed which enables 38.015 Mb/s to be carried. Taking the nominal band of 33 MHz as the reference for efficiency calculation, the transmission efficiency appears to be equal to 38.015 [Mb/s] / 33 [MHz] = 1.15.

In case of use of the DVB-S2 standard, with 8PSK modulation, FEC=2/3, roll-off=0.35, a symbol rate equal to 27.5 Mbaud (active pilot tones) is employed that allows 52.231 Mb/s to be carried.

Still taking the nominal band of 33 MHz as the reference, the transmission efficiency appears to be equal to 52.231 [Mb/s] / 33 [MHz] = 1.58.

The above stated value for the rate symbol, equal to 27.5 Mbaud, is substantially considered as an upper limit, the values of all the other parameters being the same, and going beyond it is not allowed.

This is due to the fact that the frequency bands associated with the different transponders are adjacent to each other; an increase in the symbol rate, the nominal band being the same (e.g. 33 MHz, as said above), and the other parameters being the same, would run the risk of causing interferences between contiguous bands, lowering the transmission quality and consequently the quality of the product supplied to the clients, to an unacceptable degree. Typically, it is the satellite handler that verifies correct use of the nominal band slots granted to the different broadcasters.

The Applicant has surprisingly found that, in spite of the deep-rooted attitude not to overcome the above stated limit, it is actually possible to increase the symbol rate without creating particularly troublesome interferences between contiguous bands.

As it will become more apparent in the following, in fact, it has been verified that, the occupied nominal band being the same, it is possible to increase the symbol rate up to about 29.9 Mbaud, without the transmission quality being damaged by interference phenomena.

However, the Applicant has also noticed that, as the symbol rate grows, the available nominal band being the same, the C/N (Carrier-to-Noise) ratio decreases due to distortion of the transmission spectrum, leading to an important reduction in the quality of the product supplied to the addressees of the television contents.

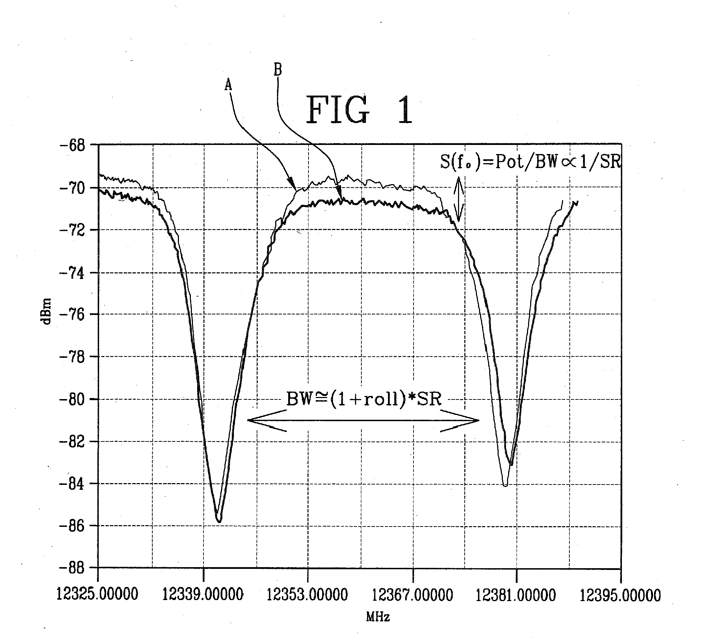

In this regard, Fig. 1 diagrammatically shows two transmission spectra: identified with reference "A" is the transmission spectrum at 27.5 Mbaud, while identified with reference "B" is the transmission spectrum at 29.9 Mbaud. As can be seen, spectrum "B" is larger than spectrum "A" (exactly due to the increase of the symbol rate) and lower (since the overall power remains unchanged) than spectrum "A".

By increasing the number of symbols per second (as said, from 27.5 Mbaud to 29.9 Mbaud) of a modulated signal, and keeping the average output power unchanged, each symbol will have the availability of less energy. Due to this, worsening of the C/N ratio of the transmission occurs bringing about, as a result, a negative impact on the reception quality to the public.

In addition, a greater amount of information is eliminated, by the filters placed at the ends of the nominal band, in spectrum "B" as compared with spectrum "A", this last-mentioned aspect contributing to deterioration of the C/N ratio.

The Applicant has therefore found that it is possible to re-establish the quality required for a satellite broadcast transmission, such as television transmission, through a suitable pre-correction carried out by the ground control apparatus. This pre-correction enables the signal to be modified, before it is sent to the uplink antennas, so as to keep into account the distortions to which it will be submitted during transmission via satellite.

In particular, pre-correction is carried out as a function of the operating features of the satellite. In other words, knowing the real satellite behavior (i.e. errors and distortions introduced by the satellite itself) a priori, it is possible to carry out said pre-correction so as to compensate "in advance" for the non-idealities that are predictable.

By so doing, the C/N ratio previously damaged due to the symbol rate increase is improved, the quality of the signal received by the final user being brought again to acceptable levels.

By virtue of the above, the invention is defined by the combination of technical features being part of the independent claim 1. The dependent claims have preferred and advantageous features. Further features and advantages will become more apparent from the description of a preferred and not exclusive embodiment of the invention. This description is given hereinafter with reference to the accompanying drawings, in which:
- Fig. 1 shows two transmission spectra at different symbol rates;
- Figs. 2 and 3 show transfer functions of a satellite (transponder);
- Fig. 4 shows a block diagram of an apparatus according to the invention;
- Fig. 5 shows a block diagram of a system in which the apparatus of Fig. 4 is inserted. With reference to the drawings, generally denoted at 1 is an apparatus for sending signals to a satellite configured for broadcast transmissions.

Apparatus 1, as said, can be inserted in a satellite broadcast transmission context as "ground control apparatus".

Preferably, it can be used for processing digital contents intended for television transmissions.

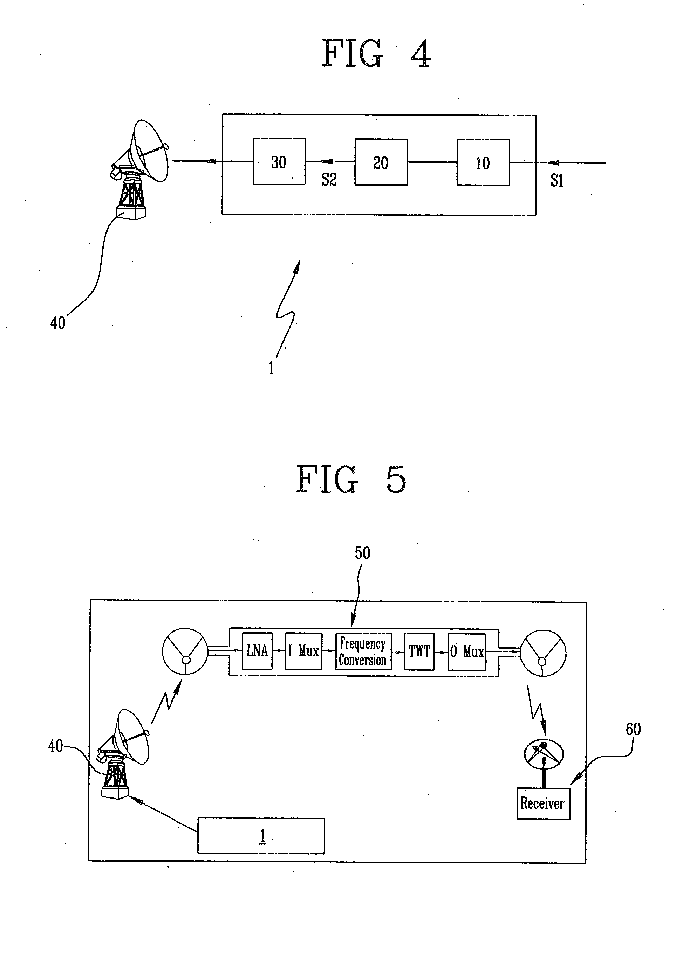

Apparatus 1 (Figs. 4, 5) first of all comprises an input interface 10 for receiving an input signal S1 containing data to be broadcast transmitted. These data can for example concern live broadcast television programs or television programs pre-stored on suitable filing media.

Signal S1 can be, for example, in the MPEG2 Transport Stream format.

Apparatus 1 further comprises a modulator 20, conveniently designed for processing the input signal S1 and making it suitable for a satellite transmission.

Following this processing, modulator 20 outputs a modulated signal S2. The modulated signal S2 is then sent, through an output interface 30 of apparatus 1, to one or more uplink antennas 40. Said antennas allow transmission to a satellite 50, so that the concerned contents can then be broadcast and be therefore received by a plurality of ground users (generally identified with reference numeral 60 in Fig. 5).

Satellite 50 is configured for receiving and retransmitting the modulated signal S2 in a nominal frequency band B. The nominal band B is included between 30 MHz and 35 MHz and in particular is substantially equal to 33 MHz. Practically, satellite 50 will have the availability of a plurality of frequency slots (the so-called transponders), each of a width equal to about 33 MHz and dedicated to reception and re-transmission of signals from respective modulators.

In greater detail as regards modulator 20, modulation preferably takes place following the DVB-S or DVB-S2 standard.

In particular, in the first case a QPSK modulation can be adopted in which the FEC (Forward Error Correction) parameter is equal to or greater than 2/3, and the roll-off parameter is substantially equal to 0.35. In case of DVB-S2 standard, the modulation carried out by modulator 20 can be of the 8PSK type, the FEC parameter being substantially equal to or greater than 2/3 and the roll-off parameter being substantially equal to about 0.35.

Given the above mentioned nominal band B (33 MHz), a standard symbol rate SSR substantially equal to 27.5 Mbaud is defined. Advantageously, modulator 20 is configured for processing the input signal S1 in such a manner that the symbol rate SR of the modulated signal S2 is greater by at least 5% relative to the standard symbol rate SSR. Preferably, the symbol rate SR of the modulated signal S2 is greater by at least 8% than the standard symbol rate SSR.

Practically the standard symbol rate SSR is included between 27.4 Mbaud and 27.6 Mbaud; as said, it can be substantially equal to 27.5 Mbaud.

In this context, the symbol rate SR of the modulated signal S2 is included between 29.8 Mbaud and 30.0 Mbaud, and in particular it is substantially equal to 29.9 Mbaud.

In this way, the transmission efficiency is significantly increased:
- in case of DVB-S QPSK modulation, with FEC=3/4, roll-off=0.35, the symbol rate of 29.9 Mbaud allows 41.332 Mb/s to be carried; the transport efficiency is now 41.332 [Mb/s] / 33 [MHz] = 1.25, i.e. it is increased by 8.7% as compared with the preceding 1.15;
- in case of DVB-S2 8PSK modulation, with FEC=2/3, roll-off=0.35, the symbol rate of 29.9 Mbaud (with active pilot tones) allows 57.870 Mb/s to be carried; the transport efficiency is now 57.87 [Mb/s] / 33 [MHz] = 1.75, i.e. it is increased by 10.7% as compared with the preceding 1.58.

According to the invention, modulator 20 is further configured for carrying out a pre-correction of the modulated signal S2 as a function of a transfer function of satellite 50 defined in the nominal frequency band B.

In other words, in addition to modulation of the input signal S1 in the manner as specified above, modulator 20 further processes the obtained signal S2. This further processing is based on the transfer function of satellite 50 in the nominal frequency band B employed. In fact, satellite 50, being a "real" object, introduces errors and distortions in performing re-transmission of the received signal. These errors and distortions are at least partly predictable: they are described by the real transfer function of the satellite. This function can be determined experimentally, in a starting analysis step of the system. Sometimes, the concerned data can be direct obtained by the producer or handler of the satellite itself. Preferably, the transfer function of satellite 50 can depend on:
- a real transfer function of the input and output filters of the satellite;
- a real transfer function of the amplifier interposed between said filters.

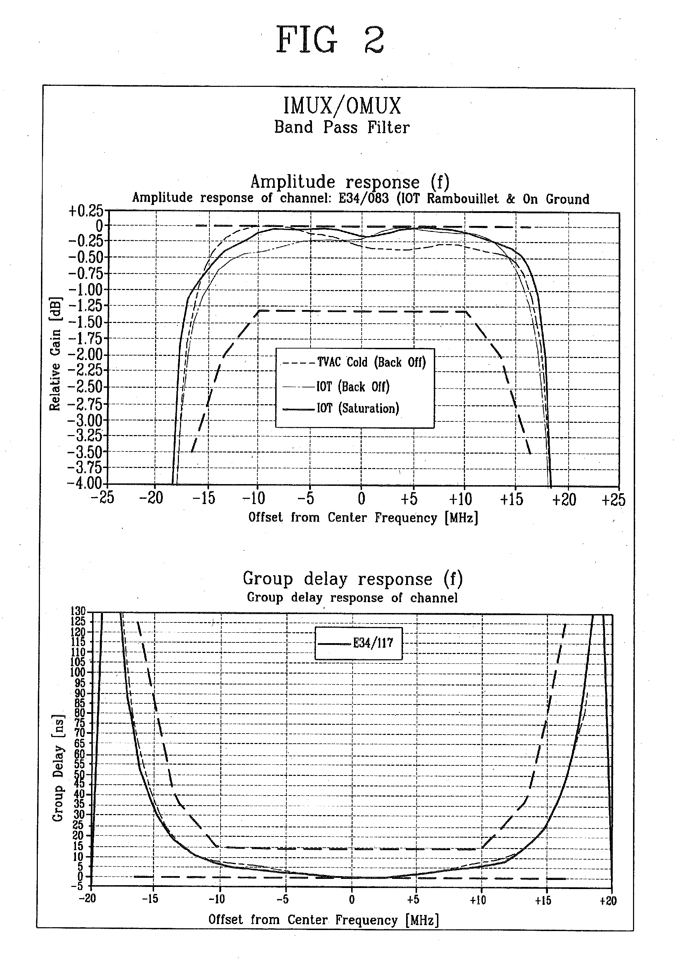

In greater detail, the filter transfer function can describe the amplitude response and the group delay response of the filters themselves. In this regard, see the example diagrams in Fig. 2.

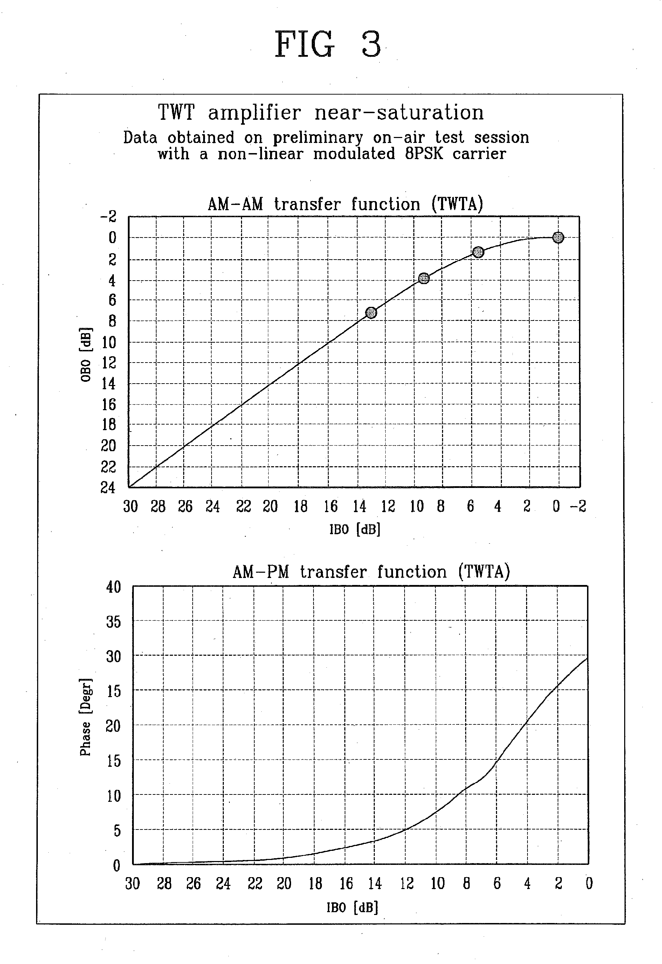

The amplifier on board the satellite can be of the TWTA (Travelling Wave Tube Amplifier) type having the transfer function described by way of example by the diagrams in Fig. 3. Therefore, being known the real input/output transfer function of satellite 50, it is possible to configure modulator 20 in such a manner that it carries out the aforesaid pre-correction. In this way, the pre-corrected signal, after being regenerated and retransmitted by satellite 50, can have a substantially non-distorted time course (within the predictability limit of the real behavior of satellite 50), exactly due to the mutual compensation between pre-correction of modulator 20 and processing carried out by satellite 50.

By way of example, referred to as F(x) the real transfer function of satellite 50, the pre-correction can be performed using a filter or amplifier, for acting on the linear component, while for maximising the pre-correction efficiency it is also advantageous to work on the non-linear part of the transfer function. For the last-mentioned aspect, a suitable software can be employed which is able to consider these factors too in the calculation, in order to reach a better pre-correction feature equal to 1/F(x). For instance, the used software can be Newtec (Equalink^{™}) - Newtec Cy N.V, Laarstraat 5, B-9100 Sint-Niklass.

The invention achieves important advantages.

First of all the apparatus of the invention allows the amount of the transmitted information to be increased, the occupied nominal band being the same, without impairing the transmission quality to an important degree. Therefore, the invention enables a more efficient management of a presently very critical resource, i.e. the radio frequency "band". Another important advantage consists in that it can be made compatible with already existing systems: accomplishment of the invention in fact only needs modifications to the modulation apparatus, while both the satellite and above all the receiving devices of the final clients that can even be several millions of units, remain unchanged. It is therefore clear that an important advantage is obtained without being obliged to intervene on a multitude of devices spread over a very wide geographical area (at least having the same extension as that of the national territory).

## Claims

1. An apparatus for sending signals to a satellite configured for broadcast transmissions, said apparatus comprising:
- an input interface (10) for receiving an input signal (S1) containing data to be broadcast transmitted;
- a modulator (20) for carrying out a modulation of said input signal (S1) and outputting a corresponding modulated signal (S2);
- an output interface (30) connected to said modulator (20) to send said modulated signal (S2) to an uplink antenna (40) for sending it to a satellite (50) the latter being configured for receiving and retransmitting said modulated signal (S2) in a nominal frequency band (B),
a standard symbol rate (SSR) being defined for said modulation and said retransmission of said modulated signal (S2);
wherein:
- said modulator (20) is configured for processing said input signal (S1) in such a manner that the symbol rate (SR) of said modulated signal (S2) is greater by at least 5% than said standard symbol rate (SSR),
- said modulator (20) is further configured for carrying out a pre-correction of said modulated signal (S2) as a function of a transfer function of said satellite (50) in said nominal frequency band (B).

2. An apparatus as claimed in claim 1, wherein the symbol rate (SR) of said modulated signal (S2) is greater by at least 8% than said standard frequency rate (SSR).

3. An apparatus as claimed in claim 1 or 2, wherein said standard frequency rate (SSR) is included between 27.4 Mbaud and 27.6 Mbaud.

4. An apparatus as claimed in anyone of the preceding claims wherein the symbol rate (SR) of said modulated signal (S2) is included between 29.8 Mbaud and 30.0 Mbaud.

5. An apparatus as claimed in anyone of the preceding claims, wherein said nominal frequency band (B) has a band width included between 30 MHz and 35 MHz, and in particular said band width is substantially equal to about 33 MHz.

6. An apparatus as claimed in anyone of the preceding claims, wherein said modulator (20) is configured for processing said input signal (S1) for a transmission according to the DVB-S standard, with QPSK modulation, wherein the FEC (Forward Error Correction) parameter is equal to or greater than 2/3, and the roll-off parameter is substantially equal to about 0.35.

7. An apparatus as claimed in anyone of claims 1 to 5, wherein said modulator (20) is configured for processing said input signal (S1) for a transmission according to the DVB-S2 standard, with 8PSK modulation, wherein the FEC (Forward Error Correction) parameter is equal to or greater than 2/3, and the roll-off parameter is substantially equal to about 0.35.

8. An apparatus as claimed in anyone of the preceding claims, wherein the transfer function of said satellite (50) depends on at least one of:
- a transfer function of input and/or output filters of said satellite (50);
- a transfer function of an amplifier of said satellite (50).

9. A satellite broadcast transmission system, comprising:
- an apparatus (1) as claimed in anyone of the preceding claims;
- an uplink antenna (40) connected to said apparatus for sending said modulated signal (S2) to a satellite;
- a satellite (50) associated with said uplink antenna (40) for receiving said modulated signal (S2) and retransmitting it in downlink to a plurality of addressees (60).

10. A process for sending signals to a satellite configured for broadcast transmissions, said method comprising:
- receiving an input signal (S1) containing data to be broadcast transmitted;
- carrying out a modulation of said input signal (S1) and outputting a corresponding modulated signal (S2);
- sending said modulated signal (S2) to an uplink antenna (40) for sending it to a satellite (50), the latter being configured for receiving and retransmitting said modulated signal (S2) in a nominal frequency band (B),
a standard symbol rate (SSR) being defined for said modulation and said retransmission of said modulated signal (S2),
wherein said method further comprises:
- processing said input signal (S1) in such a manner that the symbol rate (SR) of said modulated signal (S2) is greater by at least 5% than said standard symbol rate (SSR),
- carrying out a pre-correction of said modulated signal (S2) as a function of a transfer function of said satellite (50) in said nominal frequency band (B).

11. A process for receiving broadcast distributed signals via satellite, comprising:
- receiving a modulated signal (S2) transmitted from a satellite (50), said satellite (50) being configured for transmitting said modulated signal (S2) in a nominal frequency band (B),
a standard symbol rate (SSR) being defined for modulation and transmission of said modulated signal (S2), the symbol rate (SR) of said modulated signal (S2) being greater by at least 5% than said standard frequency rate (SSR);
- demodulating said signal (S2) for identifying the information contained therein.

12. A process as claimed in claim 11, wherein on said modulated signal (S2) a pre-correction has been carried out, as a function of a transfer function of said satellite (50) in said nominal frequency band (B).
